(19) Europäisches Patentamt

European Patent Office

Office européen des brevets

(11) **EP 4 760 427 A1**

(12) **EUROPEAN PATENT APPLICATION**

(43) Date of publication:
**17.06.2026 Bulletin 2026/25**

(51) International Patent Classification (IPC):
***G05B 23/02*** *(2006.01)*

(21) Application number: **24219009.8**

(22) Date of filing: **11.12.2024**

(52) Cooperative Patent Classification (CPC):
**G05B 23/0289; G05B 23/0283**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
- **MACEDO, Felipe**
**8134 Adliswil (CH)**
- **CHRISTEN, Thomas**
**5413 Birmenstorf (CH)**

(74) Representative: **Vossius & Partner**
**Patentanwälte Rechtsanwälte mbB**
**Siebertstrasse 3**
**81675 München (DE)**

(54) **METHOD FOR LIFETIME PREDICTION AND MONITORING OF A PHYSICAL ASSET**

(57) The present disclosure relates to a method for monitoring a physical asset, the method comprising: receiving data associated with the physical asset from one or more data sources, wherein the data include measurements of one or more parameters of the physical asset; providing a physical model associated with the physical asset, wherein the physical model includes the one or more parameters of the physical asset; providing one or more cost functions, wherein each cost function is associated with one of a plurality of degradation scenarios; determining, based on the data, the physical model and the cost functions, a most probable degradation scenario of the degradation scenarios; and initiating a mitigation action based on the determined most probable degradation scenario indicating a potential failure.

EP 4 760 427 A1

Management System
110

Software
112

Database
114

Network(s)
120

Target System (e.g., Power System)
140

User System
130

Third-Party System
150

Fig. 1

**Description**

The present disclosure is generally directed to asset management, and, more particularly relates to a method, a device, a program product and a storage medium for monitoring a physical asset.

Failures of physical assets can have drastic consequences. In many cases, the damages from an unexpected failure can exceed the cost of the physical asset by far. In some cases, failures are prevented by monitoring the physical asset. Monitoring includes observing properties of the physical asset and identifying deviations from a normal behavior. In the case that the physical asset is monitored while it is in operation, it is also referred to as on-line monitoring. Existing monitoring use physical sensors for observing a device property. Normal behavior may be determined based on previous observations of the same physical asset, or of similar physical assets. Alternatively, normal behavior may be determined based on a statistical model. In other cases, failures are prevented using statistical predictions. For example, a physical asset may undergo maintenance regularly, for example after a minimum predetermined amount of time has passed or after the physical asset has gone through a predetermined number of cycles.

An object of the present disclosure is to provide a more accurate approach for preventing a failure.

This object is addressed by a method for monitoring a physical asset. The method comprises receiving data associated with the physical asset from one or more data sources, wherein the data include measurements of one or more parameters of the physical asset; providing a physical model associated with the physical asset, wherein the physical model includes the one or more parameters of the physical asset; providing one or more cost functions, wherein each cost function is associated with one of a plurality of degradation scenarios; determining, based on the data, the physical model and the cost functions, a most probable degradation scenario of the degradation scenarios; and initiating a mitigation action based on the determined most probable degradation scenario indicating a potential failure.

By this method, a degradation of a physical asset may be identified more accurately and reliably. This way, the degradation may be mitigated more effectively and precisely. Therefore, a more reliable method for preventing a potential failure of the physical asset is provided.

Disclosed embodiments may have further advantages over the state of the art. One object achievable by the disclosed embodiments is initiating a targeted mitigation action against the degradation of a physical asset. Another object achievable by the disclosed embodiments is early indication of a potential failure. Another object achievable by the disclosed embodiments is the determination of a most probable degradation scenario of the physical asset. Another object achievable by the disclosed embodiments is monitoring the physical asset with less expensive and/or complex monitoring sensors.

Various embodiments may preferably implement the following features.

Preferably, the method comprises receiving data associated with the physical asset from one or more data sources. The data may be received, for instance, from one or more physical sensors directed at the physical asset, from an Asset Management System or an Asset Monitoring System (AMS), from the physical asset itself, or from one or more measurement runs. Further, the data may be received from one or more of these or other sources combined.

Preferably, the data includes measurements of one or more parameters of the physical asset. The parameters may include, for instance, electrical quantities, mechanical quantities, electro-mechanical quantities, and/or further physical quantities. The measurements may include a scalar or vector reflecting a physical quantity. The measurements may further include a representation of interdependent quantities. For example, a graph or a table may represent the interdependency of two quantities over a particular range. As one example, the measurements may include a graph representing an electrical current of an impulse response over time. As another example, the measurements may include a table representing a dependency of a voltage on a temperature.

Preferably, the method further comprises providing a physical model associated with the physical asset. The physical model may be used for simulating the behavior of the physical asset. Thus, using the physical model, an expected behavior of the physical asset may be determined. In particular, the physical model can provide expected values for the measurements of one or more parameters of the physical asset. The physical model may also be referred to as a digital twin of the physical asset.

Preferably, the physical model includes the one or more parameters of the physical asset. The behavior of the physical asset may be defined in terms of state variables $\vec{\phi}(t)$, which relate to the dynamics of the device on a fast timescale of operation, and model variables $\vec{\mu}$, which relate to the dynamics of the device on a slow timescale of degradation. The model variables $\vec{\mu}(t)$, which are considered to be continuous or quasi-continuous with respect to simulating degradation, may be treated as constant model parameters $\vec{\mu}$ with regard to simulating operation.

By simulating the behavior of the physical asset, the physical model allows the estimation of the model parameters by an optimization function. Thus, using the physical model, simulated values of the one or more parameters can be provided for comparison with the measurements of the one or more parameter.

Preferably, the method further comprises providing one or more cost functions. A cost function may represent a weighting among the variables of the physical model. In one example, a cost function may represent two variables of higher relevance compared to other variables of the physical model. Further, a cost function may represent a relationship between the variables of the physical model. In one example, a cost function may express that two variables are proportional to each other.

Preferably, each cost function is associated with one of a plurality of degradation scenarios. Thus, according to one of the previous examples, a cost function may indicate that for one degradation scenario, two variables are more relevant than other variables. Further, according to one of the previous examples, a cost function may indicate that two variables are proportional in a particular degradation scenario.

Preferably, the method further comprises determining a most probable degradation scenario of the degradation scenarios based on the data, the physical model and the cost functions. Hereto, a fitting may be performed based on the data, the physical model and the cost functions. The term fitting may have a more general meaning than usually, going beyond the bare fitting of a measurement curve by the physical model, i.e. the digital twin. The parameters of the physical model relate to physical properties of the physical asset and thus represent actual degradation processes. Therefore, the fitting process, like an optimization with a cost function, can be designed for covering the expected behavior according to a specific degradation scenario towards an associated failure mode. The cost function to be minimized can be based on a function metric, like the usual mean square error. By minimizing each of the one of more cost functions based on the data and the physical model, and comparing the resulting metrics, one cost function is determined to represent the lowest cost, i.e. the lowest distance between simulated behavior and measured behavior. The degradation scenario associated with the cost function may be deemed to be the most probable degradation scenario. The decision may be based on further additional aspects, e.g. the a priori probabilities of each degradation scenario. For example, a first degradation scenario may have a much lower a priori probability than a second degradation scenario. In this case, even when the fitting is slightly more successful for a first cost function than for a second cost function, i.e. the cost metric fitting the first cost function is slightly lower, the degradation scenario associated with the second cost function may still be deemed the most probable degradation scenario. Thus, a higher confidence is required for a less probable degradation scenario to be selected.

Preferably, the method further comprises initiating a mitigation action based on the determined most probable degradation scenario indicating a potential failure.

Preferably, the physical model may include a set of ordinary differential equations, ODEs.

Preferably, determining a most probable degradation scenario may include minimizing a cost function. The cost function may include a weight vector and a difference of a measurement vector representing the data and a prediction vector representing the physical model. The difference may be weighted using the weight vector.

Preferably, the physical asset may be an electrical device, a mechanical device, or an electromechanical device. According to one embodiment, the device is selected from the group comprising a circuit breaker, a transformer, a power electronics device, and an energy storage device. The power electronics device may for example be one a converter, an inverter, or a cycloconverter. The energy storage device may for example be a battery, a capacitor, a fuel cell, or a supercapacitor.

Preferably, the one or more parameters of the physical asset may include at least one of a current, a voltage, an electrical resistance, a gas pressure, a travel curve, a vibration level, a speed, or a rotation rate. When the physical asset is a circuit breaker, the one or more parameters of the physical asset may include any of motor current, trip coil current, dielectric gas pressure, and contact travel curve. The one or more parameter of the physical asset may further include any of: an opening/closing speed of a movable contact of the circuit breaker, travel of the movable contact, total travel of the movable contact, over travel of the movable contact, rebound of the movable contact, opening/closing time of the circuit breaker, and opening/closing peak coil electric current of the circuit breaker

Preferably, the method may further include calculating, based on the data, the physical model, and the determined most probable degradation scenario, a remaining useful life, RUL, of the physical asset and/or a probability of failure of the physical asset.

Preferably, initiating a mitigation action may be further based on the RUL undercutting a predefined threshold and/or the probability of failure exceeding a predefined threshold.

Preferably, each cost function may overweight parameters associated with a respective associated degradation scenario. Similarly, the cost function may underweight parameters not associated with a respective associated degradation scenario.

Parameters which may be associated with a degradation scenario may include, for example, a drive spring stiffness, a friction constant, or a coil resistance.

Preferably, determining the most probable of the degradation scenarios may comprise minimizing each of the cost functions, determining which cost function converges best, and identifying the degradation scenario associated with the respective cost function.

Preferably, minimizing each of the cost functions may comprise generating at least one combined cost function as a linear combination of a plurality of cost functions. In this case, determining the most probable of the degradation scenarios of the degradation scenarios may comprise determining which combined cost function converges best, identifying the factors of the respective linear combination, and identifying the degradation scenarios associated with the respective plurality of cost functions.

The linear combination of a plurality of cost functions may, for example, be generated by combining the weight functions of two or more cost functions into a single weight function and using it in of the cost function approached disclosed herein.

Preferably, initiating a mitigation action may comprise at least one of triggering an alarm, limiting a load on the physical asset, modifying one or more parameters of the physical asset, adjusting resources for monitoring the physical asset, shutting down the physical asset, and/or triggering maintenance or replacement of the physical asset, based on the determined scenario.

Preferably, the alarm may be triggered in reaction to the generated signal indicating a critical degradation scenario within a predetermined amount of time, used for future maintenance scheduling. For example, an alarm may be triggered when, for a predetermined time, for example one week, a predicted reliability value of a physical asset is below a predetermined reliability value, for example, below 0.9 or 0.95. In reaction to the alarm, the physical asset may be scheduled for a regular weekly maintenance, thus preventing a failure without requiring emergency actions. At the same time the alarm allows using the lifetime of wearable parts or physical assets to an optimal extent, as a margin of safety is not based on speculation, but on the best available knowledge about the technical state of the device. By triggering an alarm in reaction to a generated signal that indicates a critical health prediction within a predetermined amount of time, an organized and balanced maintenance schedule is facilitated. In this way, a state of health of the devices in a fleet may be balanced and device failure may be prevented efficiently.

Preferably, the cost function may reflect a prediction of a degradation scenario based on the physical model.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;
FIG. 2 shows a flow diagram of a method according to embodiments;
FIG. 3 shows a physical asset for applying a method according to embodiments;
FIG. 4 shows a current diagram of the physical asset of Fig. 3.

In an embodiment, methods, devices, program products and non-transitory computer-readable media are disclosed for monitoring a physical asset.

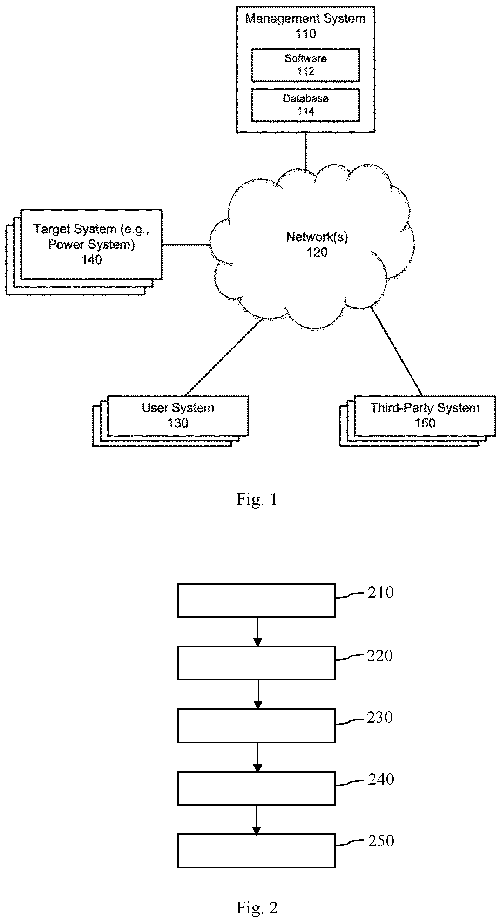

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, an asset monitoring or management system (AMS), a supervisory control and data acquisition (SCADA) system, a power management system (PMS), an energy management system (EMS), a distribution management system (DMS), an advanced DMS (ADMS), and the like. As one specific example, management system 110 may consist of, comprise, or be comprised in the Lumada® Asset Performance Management (APM) system offered by Hitachi Vantara of Santa Clara, California. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), Internet Control Center Communications Protocol (ICCP) International Electrotechnical Commission (IEC) 61850, and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems, target systems, third-party systems, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which one or more agents (e.g., an asset manager) of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system 140 may comprise any type of system for which data are monitored, analyzed, and acted upon. In general, target system 140 may be any system that comprises a plurality of physical assets that are being monitored. However, in the context of specific, nonlimiting examples that are provided throughout the present disclosure, it may be assumed that target system 140 comprises or consists of a power system. A power system may comprise one or more, and generally a plurality of, physical assets (e.g., power resources) connected in an electrical network, such as a power distribution network, a power transmission network, and/or the like. The physical assets may comprise power generators, energy storage systems, loads (e.g., rechargeable energy storage system or other controllable load, non-controllable load, etc.), transformers, and/or the like. The electrical network, which may span a large geographic region, may have complex characteristics, such as network topology, device equipment parameters, line flow limits, resource response rates, and/or the like.

Like user system(s) 130, third-party system(s) 150 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), sensor-based monitoring systems (e.g., arrays of one or more sensors), and/or the like. However, it is generally contemplated that third-party system(s) 150 would comprise servers representing external data sources that supply data to one or more processes implemented by management system 110.

Management system 110 may execute software 112, comprising one or more software modules that implement one or more of the disclosed processes. In addition, management system 110 may comprise, be communicatively coupled with, or otherwise have access to database 114 that stores the data input to and/or output from one or more of the disclosed processes. Any suitable database may be utilized as database 114, including without limitation MySQL™, Oracle™, IBM™, Microsoft SQL™, Access™, PostgreSQL™, MongoDB™, and/or the like, and including cloud-based databases, proprietary databases, and unstructured databases.

FIG. 2 shows a flow diagram of a method according to embodiments.

In a first step 110 the method receives data associated with the physical asset from one or more data sources. The data include measurements of one or more parameters of the physical asset.

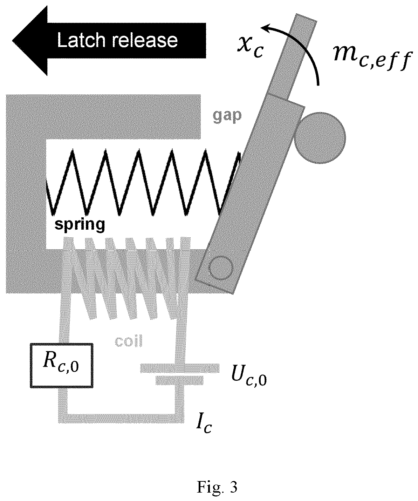

In an example, in which the physical asset is a coil actuator as described in more detail below with regard to Fig. 3, the data includes measurements of a displacement $x_c$ of an actuator, and of a coil current $I$. Generally speaking, a coil actuator behaves according to an ordinary differential equation including a vector y consisting of all mechanical and electrical state variables, a time variable t, and a vector $\mu$ consisting of model variables, such as a spring constant and a resistance of the coil. In this case, the ordinary differential equation can be written as follows:

$$\frac{dy}{dt} = F(y, t; \mu)$$

In a second step 120, the method provides a physical model associated with the physical asset. The physical model includes the one or more parameters of the physical asset. In the above example relating to a coil actuator, the physical model includes the number of coil windings $N_C$, the cross-section area of the stator of the actuator $A_c$, the magnetic induction of the core $B$, and a magnetic saturation given by a $B(H)$ relation. According to this example, the physical model can be given by the following equation in conjunction with the previous equation:

$$F_{c,mag} = \frac{d}{dx_c}\left(N_C A_c \int_0^{I_c} B(x_c, \tilde{I})d\tilde{I}\right)$$

In a third step 130, the method provides one or more cost functions, wherein each cost function is associated with one of a plurality of degradation scenarios. The cost function, which can also be called error function, provides a measure for the deviation of a simulated behavior according to the physical model from an actual behavior according to the measurements of one or more parameters. Thus, the cost function allows for estimating how well the physical asset is simulated by the physical model using specific parameter values. This way, using the cost function two sets of parameter values can be compared, by deciding if the physical asset is simulated more closely by the physical model using one set of parameter values or another.

The cost function can be based on a function metric, i.e. a metric for a function. In this case, according to one example, the function metric may be applied to a difference between a variable representing the measurements of one or more parameters and a variable representing the parameters simulated using the physical model, or vice versa. According to another example, the function metric may be applied to the square of said difference. In this case, the cost function may reflect a mean square error of the simulation according to the physical model. According to some examples, the mean square error may be weighted, wherein the weights reflect a degradation scenario.

In one such example, the cost function may include a measurement $f(t)$, a parameter vector ($\mu$) dependent model prediction $g(t,\mu)$, and a weight function $w(t)$. According to this example, the cost function may be written in the following equation:

$$C_1(\mu) = \int \big(f(t) - g(t,\mu)\big)^2 w(t)dt$$

In another such example, the cost function may include a measurement $f_n$, a parameter vector ($\mu$) dependent model prediction $g_n(\mu)$, and a weight function $w_n$, where $n$ denotes characteristic features like slopes, minima, maxima, or similar. In this example, $f_n$, $g_n(\mu)$, and $w_n$ are not time-continuous, but samples for characteristic features are used. According to this example, the cost function may be written in the following equation:

$$C_2(\mu) = \sum w_n(f_n - g_n(\mu))^2$$

In yet another such example, the cost function may include a measurement $f^{(m)}(t)$, a parameter change vector $\Delta\mu^{(m)} = \mu^{(m)} - \mu^{(m-1)}$ dependent model prediction $g(t,\mu)$, and a weight function $w^{(m)}(t)$, where (m) denotes a monitoring instance. In this example, the time $t$ relates to a fast timescale of operation, and (m) relates to a slower timescale of monitoring. According to this example, the cost function may be written in the following equation:

$$C_3(\Delta\mu) = \int \big(f^{(m)}(t) - f^{(m-1)}(t) - \Delta\mu^{(m)} \cdot \nabla_\mu g(t,\mu)\big)^2 w^{(m)}(t)dt$$

In this equation, the direction of the parameter change vector $\Delta\mu^{(m)}$ indicates the degradation mode, while the size of the parameter change vector $\Delta\mu^{(m)}$ may give an indication on the degradation rate.

In the above example relating to a coil actuator, any of the above equations may be utilized for the cost functions. It is noted that each cost function returns a scalar based on all provided input. This way, it may be simple to estimate how well the physical asset is simulated. A cost function may be based on certain coil current characteristics, depending on the associated degradation scenario. For example, a cost function may be based on a slope of a coil current during a voltage application. For a first degradation scenario, which is associated with malfunctions of a trip and close coil actuator, a first cost function using a first weight function $w1(t)$ is provided. For a second degradation scenario, which is associated with degradation of a coil material, a second cost function using a second weight function $w2(t)$ is provided.

In a fourth step 140, the method determines a most probable degradation scenario of the degradation scenarios based on the data, the physical model and the cost functions.

Hereto, a fitting procedure may be applied to the cost function.

Further, the fitting procedure may include, for example, choosing between different cost functions $C_k$, or between

different weight functions w. This way, the fitting procedure may be adaptive, e.g. adapting to changes in the parameter vector value $\mu$, a state of health of the physical asset, and/or measurements $f(t)$. For example, when a physical asset reaches a certain distance to the end of life for a specific failure mode, the fitting procedure may increase the weight function w(t) for failure-relevant parameters in a certain time interval.

In the above example relating to a coil actuator, an optimization routine may be applied to minimize a cost function based on the physical model as given above. This way, simulation results may be fitted to the measurements. In one example, an error minimization routine using Powell's algorithms may be utilized to minimize the cost function. This way, the optimization routine may be particularly fast and accurate. In another example, a parameter optimization routine using Optuna9 may be utilized to minimize the cost function. This way, the optimization routine may be particularly flexible.

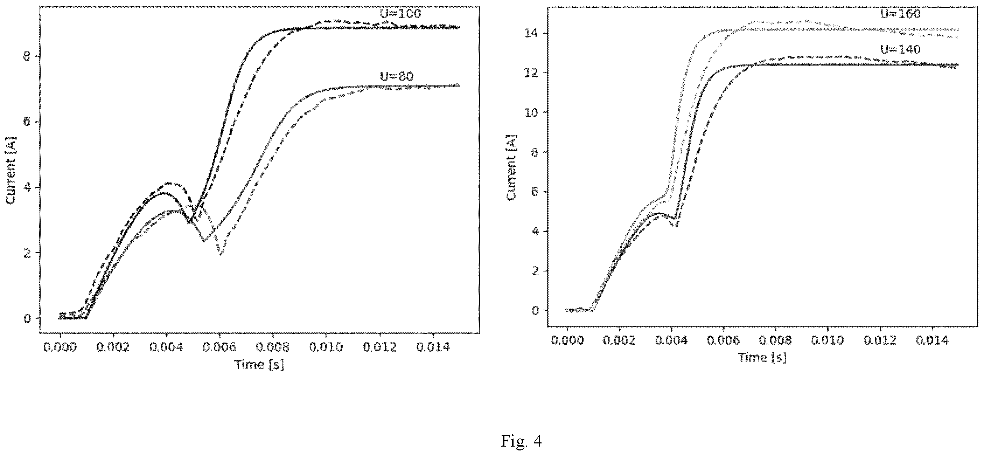

The optimization routine may be configured as follows: at every step, a new set of parameter values is chosen by the optimization routine, whereas the cost function is calculated using the new set of parameter values as reference. If a relative difference between the arguments and their two cost function evaluations reaches a certain predefined value, the optimization converges. In other words, once the physical asset is simulated sufficiently well by the physical model using a specific set of parameter values on a specific cost function, the degradation scenario associated with that cost function is deemed a most probable degradation scenario. An exemplary optimization routine applied to the coil actuator associated with the degradation scenario of fluctuating voltages is discussed below with reference to Fig. 4. The same optimization routine, using a different cost function, may be applied to identify other degradation scenarios. This way, each degradation scenario may be tested to determine if it is a most probable degradation scenario, such as high operating forces of the actuator, or degradation of the coil material. These degradation scenarios lead to different characteristics of the coil current, which can be physically estimated. Therefore, applying the digital twin method, the diagnostic can be more precise and specific than the currently adopted method. In one embodiment, a degradation scenario associated with the lowest evaluation of all cost functions may be deemed a most probable degradation scenario. In another embodiment, any degradation scenario associated with a cost function which reaches a certain predefined value may be deemed a most probable degradation scenario.

In the above example relating to a coil actuator, the optimization routine can be used to identify other malfunctions, such as high operating forces of the actuator or degradation of the coil material. These failure modes lead to different characteristics of the coil current, which can be physically estimated. Therefore, applying the digital twin method, the diagnostic can be more precise and specific than the currently adopted method, as described in Figure 1. This provides the necessary information for Service to take the necessary corrective actions on the operating device

In a fifth step 150, the method initiates a mitigation action based on the determined most probable degradation scenario indicating a potential failure.

The mitigation action may depend on the physical asset and on the determined most probable degradation scenario. A mitigation action may be one or more of triggering an alarm, limiting a load on the physical asset, modifying one or more parameters of the physical asset, adjusting resources for monitoring the physical asset, shutting down the physical asset, and/or triggering maintenance or replacement of the physical asset, based on the determined scenario.

In the above example relating to a coil actuator, for example a replacement of the coil may be initiated in the case when the determined most probable degradation scenario is a degradation of the coil material. As another example, in the case when the determined most probable degradation scenario is fluctuations of the voltage source, an adjustment of monitoring resources towards a closer monitoring of the voltage source may be initiated.

FIG. 3 shows a physical asset for applying a method according to embodiments.

The physical asset depicted in Fig. 3 is a coil actuator 300 which is discussed as an exemplary physical asset throughout present disclosure. The coil actuator 300 includes an electrical circuit 310 with a resistance element 311, a capacitor element 312, and a coil 313. The coil actuator further includes a mechanical subsystem 320 with a latch 321, a spring 322, and a metal core 323. The spring 322 is attached to the latch 321 on one end and to the metal core 323 on another end. The latch 321 is movably attached to one end of the metal core 323. Depending on its state, it may or may not have a gap $x_c$ to another end of the metal core. The metal core 323 is surrounded by the coil 313 on one end. Accordingly, when the electrical circuit 310 is powered, a magnetic flux is induced in the metal core 323, moving the latch 321 against a resistance of the spring 322, thereby changing the gap $x_c$.

The coil actuator has electrical and mechanical degrees of freedom. As described above, the gap $x_c$ on the mechanical subsystem is influenced by the electrical circuit, and vice versa.

FIG. 4 shows a current diagram of the physical asset of Fig. 3. The diagram shows a coil current according to measured values in dashed lines, and the same coil current according to simulated values in solid lines, for four different voltage levels 80V, 100V, 140V and 160V.

As described before, the method for monitoring a physical asset includes determining a most probable degradation scenario of the degradation scenarios based on the data, the physical model and the cost functions. In the example of the coil actuator discussed above, the determining a most probable degradation scenario may include an optimization routine. The optimization routine is configured to choose, at every step, a new set of parameter values, whereas the cost function is calculated using the new set of parameter values as reference. By a direct comparison between the measured and simulated data, the occurrence of a failure mode is deduced. For instance, fluctuations of the voltage source value can lead to malfunctions of the trip and close coil actuator. The referred measured and simulated values can be observed in Fig. 4. Thus, it can be seen that the simulated data according to a degradation scenario of fluctuations of the voltage source is fitted closely to the measured data. Consequently, the fluctuations of the voltage source may be determined to be a most probable degradation scenario.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of the claims. Thus, the disclosure is not intended to be limited to the implementations shown herein, but is to be accorded the widest scope consistent with the novel features and principles disclosed herein, as recited in the claims below.

**Claims**

1.  A method for monitoring a physical asset, the method comprising:

    receiving data associated with the physical asset from one or more data sources, wherein the data include measurements of one or more parameters of the physical asset;
    providing a physical model associated with the physical asset, wherein the physical model includes the one or more parameters of the physical asset;
    determining, based on the data, the physical model and the cost functions, a most probable degradation scenario of the degradation scenarios; and
    initiating a mitigation action based on the determined most probable degradation scenario indicating a potential failure.

2.  The method of claim 1, wherein the physical model includes a set of ordinary differential equation, ODEs.

3.  The method of claim 1 or 2, wherein the determining a most probable degradation scenario includes minimizing a cost function,

    wherein the cost function includes a weight vector and a difference of a measurement vector representing the data and a prediction vector representing the physical model, and
    wherein the difference is weighted using the weight vector.

4.  The method of any one of the preceding claims, wherein the physical asset is an electrical device, a mechanical device, or an electromechanical device.

5.  The method of any one of the preceding claims, wherein the one or more parameters of the physical asset include at least one of a current, a voltage, an electrical resistance, a gas pressure, a travel curve, a vibration level, a speed, or a rotation rate

6.  The method of any one of the preceding claims, further claims, further comprising calculating, based on the data , the physical model, and the determined most probable degradation scenario, a remaining useful life, RUL, of the physical asset and/or a probability of failure of the physical asset

7.  The method of claim 6, wherein initiating a mitigation action is further based on the RUL undercutting a predefined threshold and/or the probability of failure exceeding a predefined threshold.

8.  The method of any one of the preceding claims, wherein each cost function overweights parameters associated with a respective associated degradation scenario and underweights parameters not associated with a respective assicated degradation scenario.

9. The method of any one of the preceding claims, wherein determining the most probable og the degradation scenarios comprises minimizing each of the cost functions, determining which cost function converges best, and identifying the degradation scenario assocated with the respective cost function.

10. The method of claim 9,

   wherein minimizing each of the cost function comprises generating at least one combined cost function as a linear combination of a plurality of cost funcions, and
   wherein determining the most portable of the degradation scenario of the degradation scenario comprises determining which combined cost function converges best, identifying the factors of the respective linear combination, and identifying the degradation scenarios associated with the respective plurality of cost functions.

11. The method of any one of the preceding claims, wherein initiating a mitigation action comprises at least one of triggering an alarm, limiting a load on the physical asset, modifying one or more parameters of the physical asset, adjusting resources for monitoring the physical asset, shutting down the physical asset, and/or triggering maintenance or replacement of the physical asset, based on the determined scenario.

12. The method of any one of the preceding claims, wherein the cost function reflects a prediction of a degradation scenario based on the physical model

13. Computing device comprising one or more processors configured to perform the method of any one of the preceding claims.

14. Computer program product comprising instructions that, when executed by one or more processors, cause the one or more processors to perform the method of any one of the preceding calims.

15. Non-transitory computer-readable strorage medium comprising the computer program pruduct according to the preceding claims.

Fig. 1

Fig. 2

Fig. 3

Fig. 4

Europäisches
Patentamt

European
Patent Office

Office européen
des brevets

**EUROPEAN SEARCH REPORT**

Application Number

**EP 24 21 9009**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/356781 A1 (FU ROBIN SANG [US]) 13 December 2018 (2018-12-13) * paragraph [0009] - paragraph [0011] * * paragraph [0027] - paragraph [0061] * * paragraph [0079] - paragraph [0093] * ----- | 1-15 | INV. G05B23/02 |
| A | EP 3 996 027 A1 (ABB SCHWEIZ AG [CH]; HITACHI ENERGY SWITZERLAND AG [CH]) 11 May 2022 (2022-05-11) * paragraph [0173] * ----- | 6 | |
| A | US 2013/006439 A1 (SELVARAJ GOPINATH [IN] ET AL) 3 January 2013 (2013-01-03) * paragraph [0011] * * paragraph [0057] - paragraph [0067] * ----- | 3 | |

**TECHNICAL FIELDS SEARCHED (IPC)**

G05B

The present search report has been drawn up for all claims

| Place of search | Date of completion of the search | Examiner |
|---|---|---|
| Munich | 30 April 2025 | Kuntz, Jean-Marc |

EPO FORM 1503 03.82 (P04C01)

## ANNEX TO THE EUROPEAN SEARCH REPORT
## ON EUROPEAN PATENT APPLICATION NO.

EP 24 21 9009

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| US 2018356781 | A1 | 13-12-2018 | US | 2018356780 A1 | 13-12-2018 |
| | | | US | 2018356781 A1 | 13-12-2018 |
| EP 3996027 | A1 | 11-05-2022 | AU | 2021374819 A1 | 13-04-2023 |
| | | | AU | 2024259775 A1 | 28-11-2024 |
| | | | CN | 116615745 A | 18-08-2023 |
| | | | EP | 3996027 A1 | 11-05-2022 |
| | | | EP | 4241225 A1 | 13-09-2023 |
| | | | JP | 7580879 B2 | 12-11-2024 |
| | | | JP | 2023548692 A | 20-11-2023 |
| | | | US | 2023315940 A1 | 05-10-2023 |
| | | | WO | 2022096616 A1 | 12-05-2022 |
| US 2013006439 | A1 | 03-01-2013 | AU | 2010337991 A1 | 19-07-2012 |
| | | | CA | 2785752 A1 | 07-07-2011 |
| | | | CN | 102893227 A | 23-01-2013 |
| | | | CN | 107862463 A | 30-03-2018 |
| | | | EP | 2519863 A1 | 07-11-2012 |
| | | | JP | 5996436 B2 | 21-09-2016 |
| | | | JP | 2013516671 A | 13-05-2013 |
| | | | KR | 20120117847 A | 24-10-2012 |
| | | | RU | 2012132640 A | 10-02-2014 |
| | | | US | 2013006439 A1 | 03-01-2013 |
| | | | WO | 2011080548 A1 | 07-07-2011 |
| | | | ZA | 201204798 B | 28-08-2013 |

For more details about this annex : see Official Journal of the European Patent Office, No. 12/82